# FASCICULE DE BREVET EUROPEEN

(11) **EP 0 524 096 B1**
(45) Date de publication et mention de la délivrance du brevet: **05.04.1995**
(21) Numéro de dépôt: 92402053.0
(22) Date de dépôt: 16.07.1992
(51) Int. Cl.: A47J 27/21, H01H 37/00

(54) **Appareil de chauffage d'eau, notamment bouilloire, comportant un dispositif de régulation et de rupture d'alimentation**
Wasserkocher, insbesondere Warmwasserspeicher, mit einem Regelmechanismus und Mitteln zur Stromunterbrechung
Device for heating water, in particular a boiler, comprising regulating means and means for cutting down the power supply

(30) Priorité: 19.07.1991 FR 9109165
(43) Date de publication de la demande: 20.01.1993
(73) Titulaire: SEB S.A., F-21260 Selongey (FR)
(72) Inventeur: Lacombe, Jacques, F-70100 Arc-Les-Gray (FR)
(74) Mandataire: Keib, Gérard

(56) Documents cités:
- GB-A- 2 040 572
- GB-A- 2 093 275
- GB-A- 2 173 045
- GB-A- 2 185 857
- US-A- 4 885 560

## Description

La présente invention concerne un appareil de chauffage d'eau produisant de la vapeur, notamment bouilloire, comprenant un récipient d'eau renfermant une résistance électrique de chauffage reliée à des broches destinées à être connectées à une prise de courant, un premier organe sensible à la température de la vapeur produite, coopérant avec des moyens pour couper à une certaine température l'alimentation électrique de la résistance de chauffage et un second organe sensible à la température régnant au fond du récipient, coopérant avec des moyens pour couper l'alimentation électrique de la résistance de chauffage lorsque cet organe détecte une température supérieure à un seuil prédéterminé, due à l'absence ou l'insuffisance d'eau dans le récipient.

De cette manière, l'on assure une protection thermique de la résistance électrique de chauffage dans des situations prédéterminées.

Dans l'art antérieur, il est connu de disposer de thermostats permettant d'obtenir la coupure automatique de l'alimentation électrique de l'élément chauffant de l'appareil, lorsqu'il y a production de vapeur ou bien encore en cas d'absence ou d'insuffisance d'eau de manière à prévenir la destruction dudit élément chauffant.

Un tel appareil est décrit dans le document GB - A - 2 093 075. Cependant, la coupure électrique est unipolaire et par conséquent, l'une des phases électriques de l'alimentation de la résistance n'est jamais coupée.

De tels appareils, possédant un ou deux organes permettant la coupure unipolaire de l'alimentation électrique sont également décrits dans les brevets GB - A - 2 040 572 et GB - A - 2 185 857.

On connaît d'autre part, par le brevet US - A - 4 885 560, un appareil dans lequel la coupure électrique est bipolaire. Cet appareil comporte deux organes sensibles à la température. L'un de ces organes permet de couper l'alimentation électrique bipolairement de manière définitive et l'autre, de manière réversible.

Cependant, cet appareil n'intègre pas d'organe supplémentaire permettant de prévenir la destruction de l'appareil en cas de défaut de fonctionnement des deux premiers organes.

Des thermostats intégrant une troisième fonction s'ajoutant aux deux précédentes et permettant, par une mise hors tension rapide et définitive de l'élément chauffant de l'appareil, de protéger l'appareil, sont connus.

Mais les thermostats, intégrant ces trois fonctions, actuellement disponibles sur le marché présentent un certain nombre d'inconvénients.

En effet, leur construction ancienne met en oeuvre un grand nombre de pièces détachées, ce qui ne permet pas une optimisation des coûts.

De plus, la coupure électrique réalisée lors de l'entrée en action de l'une quelconque des trois fonctions est également unipolaire.

Dans ces thermostats connus, la troisième fonction de mise hors tension rapide et définitive de l'appareil, en cas de défaut des deux autres, s'effectue par des moyens de prise de température relativement éloignés de la source de chaleur, ce qui provoque un décalage dans le temps de l'action du thermostat en cas de surchauffe anormale.

Enfin, un inconvénient majeur des thermostats connus de ce type réside dans le fait de la multiplication des contacts électriques de rupture de courant d'alimentation correspondants à chacune des fonctions précitées, ce qui augmente les sources de pannes au détriment de la fiabilité de l'appareil et de son prix de revient.

Le but de la présente invention est de remédier à ces nombreux inconvénients et concerne à cet effet un appareil de chauffage d'eau produisant de la vapeur, notamment bouilloire, comprenant un récipient d'eau renfermant une résistance électrique de chauffage reliée à des broches destinées à être connectées à une prise de courant, un premier organe sensible à la température de la vapeur produite, coopérant avec des moyens pour couper à une certaine température l'alimentation électrique de la résistance de chauffage et un second organe sensible à la température régnant au fond du récipient, coopérant avec des moyens pour couper l'alimentation électrique de la résistance de chauffage lorsque cet organe détecte une température supérieure à un seuil prédéterminé, due à l'absence ou l'insuffisance d'eau dans le récipient, les moyens de coupure de l'alimentation électrique de la résistance de chauffage coopérant respectivement avec le premier organe sensible à la température de la vapeur et avec le second organe sensible à la température régnant au fond du récipient, agissant distinctement, en fonction de leurs propres paramètres, sur un élément commun de liaison électrique formant un disrupteur.

Cet appareil est caractérisé en ce que le disrupteur est interposé directement entre les extrémités de la résistance électrique de chauffage et un extrémité des broches de connexion, pour provoquer une coupure bipolaire simultanée automatique de l'alimentation électrique dans la résistance de chauffage, en fonction desdits paramètres, et en ce que le même disrupteur est susceptible d'être actionné par un troisième organe sensible à la température pour provoquer une coupure bipolaire simultanée automatique rapide et définitive de l'alimentation électrique de la résistance de chauffage en cas de défaillance de coupure, coopérant respectivement avec les premier et second organes sensibles à la température de la vapeur et du fond de récipient.

En disposant ainsi d'un disrupteur commun à différentes fonctions, il a été obtenu une simplification notable des contacts électriques de rupture de courant tout en permettant une disposition adéquate du second organe sensible à la température régnant au fond du récipient, c'est-à-dire à proximité immédiate de la résistance électrique de chauffage.

Préférentiellement, le disrupteur est constitué par deux lames métalliques conductrices, élastiquement déformables assurant une coupure bipolaire de l'alimentation électrique, s'effectuant aux entrées de la résistance de chauffage.

Selon une autre caractéristique de l'invention, les premier et second organes sensibles à la température sont constitués par des disques bimétalliques à retournement brusque réarmables, respectivement disposés au-dessus du niveau d'eau maximum dans l'appareil et dans une zone du fond du récipient, limitrophe de la résistance de chauffage.

Selon une autre caractéristique de l'invention, le troisième organe sensible à la température régnant au fond du récipient est constitué par une pièce fusible disposée au centre de la zone précitée, dont la fusion au-delà d'une température de sécurité prédéterminée, provoque l'actionnement du même disrupteur.

D'autres caractéristiques, à considérer isolement ou selon toutes leurs combinaisons possibles apparaîtront au cours de la description qui suit et qui est effectuée en référence aux dessins schématiques annexés illustrant à titre d'exemple non limitatif comment l'invention peut être réalisée et dans lesquels:

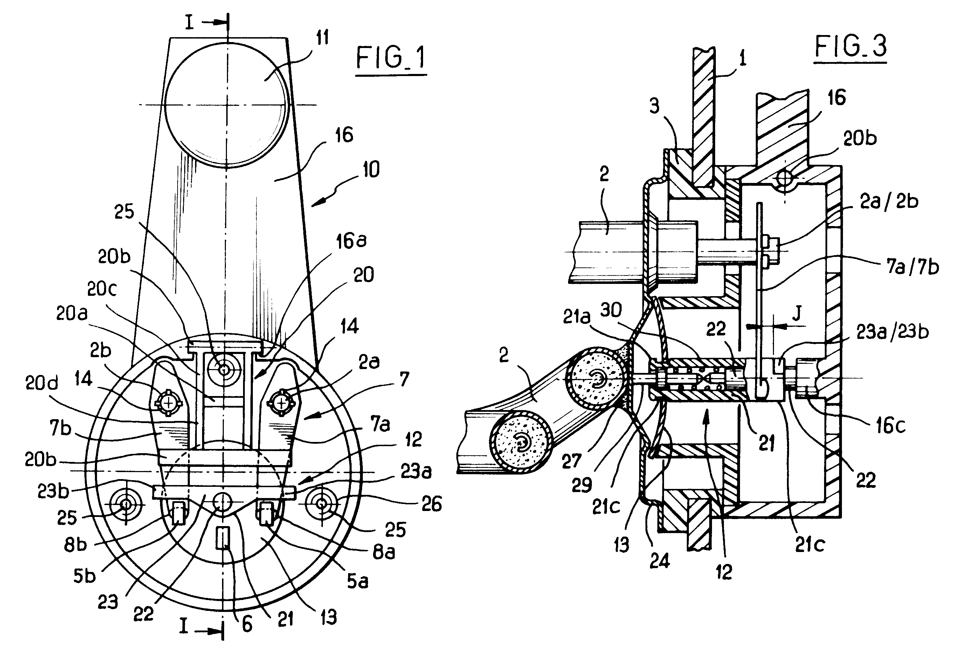

- la figure 1 est une vue frontale d'un dispositif de rupture automatique d'alimentation électrique destiné à équiper un appareil de chauffage d'eau selon l'invention;

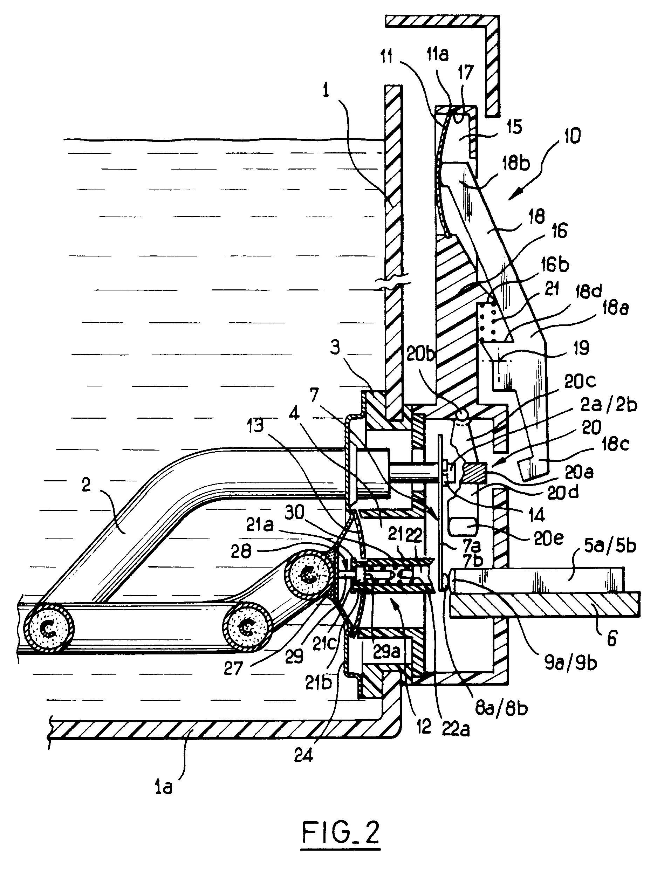

- la figure 2 est une vue en coupe longitudinale du dispositif de rupture selon la ligne I-I de la figure 1, monté sur l'appareil de chauffage d'eau;
- la figure 3 est une vue en coupe longitudinale du dispositif selon la figure 2, auquel ont été ôtées notamment les broches d'alimentation électriques pour une meilleure compréhension de son fonctionnement.

L'appareil de chauffage d'eau produisant de la vapeur, notamment bouilloire, représenté sur les figures comprend un récipient 1, susceptible de contenir de l'eau, et à proximité du fond 1a duquel est disposée une résistance électrique de chauffage 2, connue en soi, dont les extrémités libres 2a, 2b traversent la paroi latérale du récipient 1 par l'intermédiaire d'un joint d'étanchéité 3 contribuant à obturer un passage 4 ménagé à proximité du fond 1a, pour déboucher dans une zone sèche.

La résistance 2 est reliée électriquement à des broches d'alimentation 5a, 5b destinées à être connectées à une prise de courant (non représentée).

Une broche neutre 6 est également prévue pour être reliée à la terre.

Selon l'invention, la liaison électrique des extrémités 2a, 2b de la résistance 2 avec des extrémités respectives 9a, 9b des broches 5a, 5b, s'effectue directement par l'intermédiaire d'éléments conducteurs constitués par des lames métalliques conductrices 7a, 7b élastiquement déformables et munies à leurs extrémités respectives d'un grain de contact 8a, 8b en appui, en fonctionnement normal, sur les extrémités 9a, 9b des broches 5a, 5b. Les éléments de liaison électrique formés par les lames 7a, 7b constituent ainsi un disrupteur bipolaire 7 désigné dans son ensemble pouvant être manoeuvré de manière distincte en fonction de leurs propres paramètres, soit par des premiers moyens de coupure 10, désignés globalement, de l'alimentation électrique de la résistance 2 coopérant avec un premier organe 11 sensible à la température de la vapeur susceptible de se former dans une zone supérieure du récipient 1, ou encore par des seconds moyens de coupure 12, également désignés globalement, de l'alimentation électrique de la résistance 2 coopérant quant à eux avec un second organe 13 sensible à la température régnant dans le fond 1a du récipient 1, de manière à provoquer dans un cas comme dans l'autre la rupture automatique d'alimentation électrique dans la résistance 2 à partir du même disrupteur commun 7.

Les dimensions et positions relatives des broches 5a, 5b, et 6, les unes par rapport aux autres, sont établies en fonction des normes en vigueur.

A noter également ici, que les grains de contact 8a, 8b des lames 7a, 7b du disrupteur 7 ou bien les extrémités 9a, 9b des broches 5a, 5b sont réalisés en argent ou autre métal ou alliage rapporté, capable de supporter les arcs électriques dus aux coupures ou alors, en ce qui concerne les broches 5a, 5b, elles peuvent également être réalisées directement par découpe d'une bande comportant une ou deux bordures de métal précieux et connue sous le nom d'"Edgelay".

Préférentiellement, les lames 7a, 7b sont rapportées en bout des extrémités 2a, 2b de la résistance 2 suivant un mode de fixation 14 dit "en tulipe".

Ce mode de contact a l'avantage de ne pas prendre en compte dans la construction, les tolérances sur les mises à longueur des extrémités 2a, 2b de l'élément chauffant 2, en cours de fabrication, puisque ces dernières peuvent traverser les lames 7a, 7b, sans dommage et permettre un positionnement idéal de ces dernières sur lesdites extrémités 2a, 2b de la résistance 2.

Selon le présent mode de réalisation, les lames 7a, 7b du disrupteur 7 sont fixées sur les extrémités 2a, 2b de la résistance 2 respectivement de manière radiale à l'axe de celles-ci, les extrémités libres de chacune des lames 7a, 7b étant dirigées vers le bas de manière sensiblement perpendiculaire au plan du fond 1a du récipient 1.

Les premiers moyens de coupure 10 de l'alimentation électrique de la résistance 2 coopèrent avec le premier organe 11 sensible à la température de la vapeur, avantageusement constitué par un disque bimétallique à retournement brusque réarmable manuellement disposé dans un logement correspondant 15 d'une pièce support fixe 16 de l'appareil, ménagé à la partie haute de la zone sèche.

Le bord périphérique 11a du disque 11 est logé dans une gorge annulaire 17 d'un diamètre légèrement plus faible de manière à y être logé par encliquetage, selon une courbure dirigée vers la paroi du récipient 1, l'action de la température sur le matériau bimétallique étant apte à provoquer par déformation son retournement brusque selon une courbure inverse.

Les premiers moyens de coupure 10 sont montés en coopération avec le disque bimétallique 11 et sont constitués par un levier basculeur 18 articulé en 19 dans une zone intermédiaire 18a sur une partie du support fixe 16 de l'appareil et dont une de ses extrémités 18b est susceptible d'être sollicitée en actionnement autour de son articulation 19 par le retournement brusque du disque 11 sous l'effet de la température de la vapeur de l'eau renfermée dans l'appareil.

L'autre extrémité 18c agit alors à la manière d'un marteau venant frapper brusquement le disrupteur 7 sensiblement dans une zone centrale des lames 7a, 7b pour provoquer la séparation des grains de contact 8a, 8b des extrémités sous tension 9a, 9b des broches 5a, 5b.

De manière à simplifier le levier 18, tout en lui permettant d'agir simultanément sur les lames 7a, 7b, celui-ci est congru pour agir ponctuellement au centre 20a, d'un levier intermédiaire 20. Ce dernier est articulé de manière pendulaire autour d'un axe 20b obtenu de matière à son extrémité 20c et apte à tourillonner dans des paliers 16a, ménagés à même le support fixe 16. Son autre extrémité libre 20d comporte un élément de traverse 20e de longueur telle à pouvoir exercer une prise d'appui simultané sur les lames 7a, 7b, lors d'une action du levier basculeur 18 provoqué par le retournement brusque du disque 11, dont l'action est amplifiée par l'action d'un ressort d'assistance 21, interposé entre un épaulement 18d du levier 18 et un épaulement 16b du support fixe 16, lesdits épaulements 18d et 16b étant situés en vis-à-vis l'un de l'autre.

Des seconds moyens de coupure 12 distincts des précédents 10 sont susceptibles également de provoquer la rupture d'alimentation électrique de la résistance 2 en agissant sur le même disrupteur 7, mais selon des paramètres différents établis en fonction cette fois de la température régnant dans le fond 1a du récipient 1, pour prévenir un manque ou une insuffisance d'eau.

Ces moyens de coupure 12 coopèrent avec le second organe 13, sensible à la température de la bride 24 solidaire de la résistance 2, qui est constitué également d'un disque bimétallique, de même nature que le précédent 11, à retournement brusque, mais contrairement à ce dernier, son réarmement s'effectue non pas manuellement de manière volontaire, mais automatiquement en fonction des variations de température.

Le fonctionnement du disque 13 est similaire à celui du disque 11, mais il est monté au repos selon un sens de courbure opposé, car lesdits moyens de coupure 12 sont disposés, par rapport au disrupteur 7, de manière opposée aux premiers moyens de coupure 10.

Lesdits seconds moyens de coupure 12 sont constitués par un élément 21 formant fourreau, susceptible de coulisser librement sur un pion 22 issu d'une partie 16c du support fixe 16 de l'appareil et dont une de ses extrémités 21a traverse le disque 13 et est en liaison mécanique avec celui-ci, par l'intermédiaire d'une gorge périphérique 21b de l'élément 21, laquelle gorge est d'une largeur telle à permettre la déformation du disque sensiblement jusqu'à un point d'équilibre sans action sur l'élément 21 et au-delà duquel point d'équilibre, le retournement brusque du disque 13 provoque l'entraînement dudit élément 21 et conséquemment d'un cavalier 23 disposé à l'extrémité opposée 21c de l'élément 21, de manière solidaire.

Le cavalier 23 s'étend de manière symétrique de part et d'autre du pion 22 sur lequel coulisse l'élément 21, pour former des branches 23a et 23b chevauchant transversalement les lames 7a et 7b du disrupteur 7 pour les entraîner en ouverture, lors d'une action du disque 13 en fonction de la température régnant sur la bride 24 solidaire de la résistance 2.

De manière à contrôler le début d'actionnement du disrupteur 7, un jeu J est prévu entre le plan des lames 7a et 7b et le plan des branches 23a, 23b du cavalier 23, qui se trouvent en vis-à-vis les unes des autres.

Le réarmement du disque 13 s'effectue donc de manière automatique en fonction de la baisse de température, ayant lieu immédiatement après une élevation de température, pour obtenir un effet de régulation par action positive ou négative sur le disrupteur 7.

Le réarmement du disque 13 peut éventuellement être accéléré en disposant de l'eau froide, dans le fond du récipient 1, après une élévation de température anormale.

Le disque 13 est en contact avec la résistance 2 par l'intermédiaire d'une platine métallique 24 fixée directement sur ladite résistance 2 par la brasure 27 et disposée contre la face interne du joint 3, des vis 25 traversant des goujons 26 de la platine 24 assurant la fixation et l'étanchéité de l'ensemble.

Des troisièmes moyens de coupure 28 agissent également de manière distincte des premiers et seconds moyens 10 et 12.

Le rôle de ces troisièmes moyens de coupure 28 est de subvenir à une défaillance des deux autres en provoquant cette fois une rupture automatique rapide et définitive de l'alimentation électrique de la résistance 2.

Ces moyens de coupure 28 agissent également sur le disrupteur 7 par l'intermédiaire du même fourreau 21 et du cavalier 23 des seconds moyens de coupure 12 ci-dessus décrits.

Ils sont constitués par une pièce fusible 29 intercalée entre le centre d'une zone de chaleur, matérialisée par la brasure 27, et une extrémité 21a du fourreau 21, opposée au cavalier d'entraînement 23 du disrupteur 7, l'actionnement en rupture de ce dernier étant susceptible de s'effectuer sous l'action en détente d'un organe élastique 30, disposé dans le fourreau 21 entre un épaulement 22a du pion 22 d'une partie 16c du support fixe 16 et un épaulement 29a de la pièce fusible 22, elle-même en appui sur un épaulement interne 21c du fourreau 21.

Ainsi, lorsqu'une élévation de température, dans le fond du récipient 1 et plus précisément au niveau de la brasure 27, est telle à provoquer la destruction par fusion de la pièce fusible 29, il s'ensuit une libération du fourreau 21 vers la platine 24 sous la poussée du ressort 30 et conséquemment le décollement des lames 7a, 7b du disrupteur 7 par le cavalier 23 solidaire du fourreau 21 et précédemment décrit.

Le fonctionnement de l'appareil de chauffage d'eau équipé du dispositif de protection ci-dessus décrit est le suivant:

### Fonctionnement normal:

Lorsque l'eau bout dans le récipient, la vapeur générée passe vers la zone sèche par l'intermédiaire du canal, lequel a son orifice d'entrée dans le récipient positionné par construction très au-dessus du niveau d'eau le plus haut.

La vapeur introduite dans le canal rencontre donc préférentiellement le disque bimétallique 11 situé sur sa trajectoire naturelle.

Au contact de la vapeur, le disque bimétallique 11 s'incurve puis se retourne brusquement poussant ainsi le basculeur le au-delà de sa position naturelle d'équilibre en appui sur le disque 11.

Le ressort d'assistance 21 pousse alors le basculeur 18 à une vitesse élevée contre le levier 20 qui vient décoller brusquement les lames 7a, 7b, des broches 5a, 5b. Le contact est alors coupé.

Pour une nouvelle ébullition, un bouton de réarmement agissant sur le basculeur 18 permet de ramener celui-ci en position initiale réalisant ainsi le contact entre les lames 7a et 7b, des broches 5a, 5b. Le disque bimétallique 77 ayant lui-même repris en refroidissant sa position naturelle, l'appareil réalise un nouveau cycle ébullition/coupure.

### Cas de l'absence d'eau:

Si l'appareil est mis en marche sans eau dans le récipient (ou avec une quantité trop faible d'eau), le disque bimétallique 13 subit alors une surchauffe par rapport au cas où le récipient est suffisamment rempli d'eau. Il s'incurve puis se retourne brusquement tirant vers la gauche le cavalier 23, décollant ainsi les lames 7a, 7b des broches 5a, 5b. Le contact est coupé. L'écart important entre les températures de retournement hautes et basses du disque 13 permet une régulation cyclée suffisamment rapide et espacée dans le temps pour assurer la protection de l'élément chauffant.

Si l'on veut accélérer la manoeuvre de retournement au refroidissement du disque 13, il est possible de remplir d'eau le récipient, ce qui a pour effet de refroidir rapidement l'ensemble.

### Cas de défaut des fonctions de régulation normale et de protection thermique d'élément chauffant 2

La chaleur dégagée par l'élément chauffant 2 alors non régulé devient très importante.

La platine 24 subit une surchauffe dans la zone de brasure 27 avec l'élément chauffant 2.

L'extrémité de la pièce fusible 29 maintenue en appui au centre de cette zone 27 par le ressort 30 fond.

Il faut noter que l'autre extrémité du ressort 30 est en appui contre une partie 22 du support fixe 16 formant pion et constituant également le guidage du ressort 30.

La pièce 29 est munie d'un épaulement 29a la rendant solidaire en translation unilatérale avec le cavalier 23. Sous l'action de la pression du ressort 30 libérée par la fusion de la pièce 29, le cavalier 23 décolle les lames 7a, 7b des broches 5a, 5b, et le contact est définitivement coupé.

## Revendications

1. Appareil de chauffage d'eau produisant de la vapeur, notamment bouilloire, comprenant un récipient d'eau (1) renfermant une résistance électrique de chauffage (2) reliée à des broches (5a, 5b) destinées à être connectées à une prise de courant, un premier organe sensible à la température de la vapeur produite, coopérant avec des moyens pour couper à une certaine température l'alimentation électrique de la résistance de chauffage (2) et un second organe sensible à la température régnant au fond (1a) du récipient (1), coopérant avec des moyens pour couper l'alimentation électrique de la résistance de chauffage (2) lorsque cet organe détecte une température supérieure à un seuil prédéterminé, due à l'absence ou l'insuffisance d'eau dans le récipient (1), les moyens de coupure (10, 12) de l'alimentation électrique de la résistance de chauffage (2) coopérant respectivement avec le premier organe (11) sensible à la température de la vapeur et avec le second organe (13) sensible à la température régnant au fond (1a) du récipient (1), agissant distinctement, en fonction de leurs propres paramètres, sur un élément commun de liaison électrique formant un disrupteur (7), caractérisé en ce que le disrupteur est interpose directement entre les extrémités (2a, 2b) de la résistance électrique de chauffage (2) et une extrémité des broches de connexion (5a, 5b), pour provoquer une coupure bipolaire simultanée automatique de l'alimentation électrique dans la résistance de chauffage (2), en fonction desdits paramètres, et en ce qu'il comprend un troisième organe (28) sensible à la température et agissant sur le même élément commun de liaison électrique (7) pour provoquer une coupure bipolaire simultanée automatique rapide et définitive de l'alimentation électrique de la résistance de chauffage (2) en cas de défaillance des moyens de coupure (10, 12) coopérant respectivement avec les premier et second organes (11, 13) sensibles à la température.

2. Appareil de chauffage d'eau selon la revendication 1, caractérisé en ce que les moyens de coupure (10) de l'alimentation électrique coopérant avec le premier organe (11) sensible à la température de la vapeur, sont constitués par un levier basculeur (18) articulé (19) dans une zone intermédiaire (18a) sur une partie fixe (16) de l'appareil de chauffage et dont une de ses extrémités (18b) est susceptible d'être sollicitée en actionnement autour de son articulation (19) par ledit premier organe (11) sensible à la température de la vapeur, son autre extrémité venant alors agir sur l'élément de liaison électrique formant disrupteur (7) pour provoquer une rupture d'alimentation.

3. Appareil de chauffage d'eau selon l'une des revendications 1 ou 2, caractérisé en ce que le premier organe (11) sensible à la température est constitué par un disque bimétallique à retournement brusque réarmable manuellement disposé hors d'atteinte de l'eau contenue dans l'appareil.

4. Appareil de chauffage d'eau selon l'une des revendications 1 à 3, caractérisé en ce qu'un ressort d'assistance (21) est interposé entre une partie (18d) du levier basculeur (18) et une partie fixe (16b) de l'appareil pour augmenter l'action brusque du disque bimétallique sur ledit levier (18).

5. Appareil de chauffage d'eau selon l'une des revendications 2 à 4, caractérisé en ce que le levier basculeur (18) agit sur le disrupteur (7) par l'intermédiaire d'un levier pendulaire (20) articulé par une de ses extrémités (20b) sur une partie fixe (16a) de l'appareil, l'action sur le disrupteur (7) s'effectuant par son autre extrémité (20e) sous l'influence d'une poussée du levier basculeur (18) dans une zone centrale (20a) dudit levier pendulaire (20).

6. Appareil de chauffage d'eau selon la revendication 1, caractérisé en ce que les moyens de coupure (12) de l'alimentation électrique coopérant avec le second organe (13) sensible à la température régnant au fond (1a) du récipient (1) sont constitués par un fourreau (21) susceptible de coulisser librement sur un pion (22) issu d'une partie fixe (16c) de l'appareil et dont une de ses extrémités (21a) est en liaison mécanique avec ledit second organe (13) sensible à la température, qu'il traverse et l'autre extrémité forme un cavalier (23) apte à entraîner en actionnement l'élément de liaison électrique formant disrupteur (7) pour provoquer une rupture d'alimentation.

7. Appareil de chauffage d'eau selon la revendication 6, caractérisé en ce qu'un jeu (J) est ménagé au repos entre le cavalier d'entraînement (23) et l'élément de liaison électrique (7) de manière à contrôler le début d'actionnement de ce dernier.

8. Appareil de chauffage d'eau selon l'une des revendications 1 ou 6, caractérisé en ce que le second organe (13) sensible à la température est constitué par un disque bimétallique à retournement brusque réarmable disposé dans une zone du fond (1a) du récipient (1), limitrophe de la résistance de chauffage (2).

9. Appareil de chauffage d'eau selon la revendication 8, caractérisé en ce que le réarmement du disque bimétallique (13) s'effectue de manière automatique en fonction de la baisse en température régnant au fond du récipient (1a), ayant lieu immédiatement après une élévation de température, pour obtenir un effet de régulation par action positive ou négative sur l'élément de liaison électrique ou disrupteur (7).

10. Appareil de chauffage d'eau selon l'une des revendications 1 ou 6, caractérisé en ce que le troisième organe sensible à la température régnant au fond (1a) du récipient (1) est constitué par une pièce fusible (29) intercalée entre le centre d'une zone de chaleur (27) du fond (1a) du récipient (1) limitrophe de la résistance de chauffage (2) et une extrémité (21a) du fourreau (21), opposée au cavalier d'entraînement (23) de l'élément de liaison électrique (7), l'actionnement en rupture de ce dernier étant susceptible de s'effectuer sous l'action en détente d'une organe élastique (30) disposé entre une partie fixe (22) de l'appareil et un épaulement interne (21c) dudit fourreau (21).

11. Appareil de chauffage d'eau selon l'une quelconque des revendications précédentes, caractérisé en ce qu'un élément de liaison électrique distinct (7a, 7b) est disposé respectivement entre chaque extrémité (2a, 2b) de la résistance électrique de chauffage (2) et chaque extrémité (9a, 9b) des broches de connexion (5a, 5b), de manière à obtenir une coupure bipolaire simultanée de l'alimentation électrique, quels que soient les moyens de coupure (10, 12, 28) en action, agissant sur lesdits éléments de liaison électrique (7a, 7b).

12. Appareil de chauffage d'eau selon l'une des revendications précédentes, caractérisé en ce que chaque élément de liaison électrique (7a, 7b) est constitué par une lame métallique conductrice élastiquement déformable munie à son extrémité en contact avec une broche d'alimentation (5a, 5b), d'un grain de contact (8a, 8b).

## Claims

1. A water heater which produces steam, more particularly a kettle, comprising a water container (1) containing an electrical heating resistance (2) connected to pins (5a, 5b) for connection to a current supply, a first means sensitive to the temperature of the steam produced and co-operating with means for breaking the power supply to the heating resistance (2) at a certain temperature, and a second means sensitive to the temperature at the base (1a) of the container (1) and co-operating with means for breaking the power supply to the heating resistance (2) when said means detects a temperature above a predetermined threshold due to the absence of or insufficient water in the container (1), the means (10, 12) which break the power supply to the heating resistance (2) and which co-operate respectively with the first steam-temperature sensitive means (11) and with the second means (13) sensitive to the temperature at the base (1a) of the container (1), acting separately, in accordance with their own parameters, an a common electrical connecting element which forms a circuit-breaker (7), characterised in that the circuit-breaker is interposed directly between the ends (2a, 2b) of the electrical heating resistance (2) and one end of the connecting pins (5a, 5b) to effect automatic simultaneous two-pole breaking of the power supply to the heating resistance (2) in dependence on said parameters and in that it comprises a third means (28) sensitive to the temperature and acting on the same common electrical connecting element (7) to effect rapid and complete automatic simultaneous two-pole breaking of the power supply to the heating resistance (2) in the event of breakdown of the break means (10, 12) co-operating respectively with the first and second temperature-sensitive means (11, 13).

2. A water heater according to claim 1, characterised in that the means (10) for breaking the power supply and co-operating with the first steam-temperature sensitive means (11) comprise a rocking lever (18) articulated (19) in an intermediate zone (18a) on a fixed part (16) of the heater and one of the ends of which (18b) is adapted to be biased to he actuated about its articulation (19) by said first steam-temperature sensitive means (11), its other end then acting on the circuit-breaker element (7) to break the power supply.

3. A water heater according to claim 1 or 2, characterised in that the first temperature-sensitive means (11) comprises a quick-return bimetallic disc which can be manually reset and is disposed out of the range of the water in the heater.

4. A water heater according to any one of claims 1 to 3, characterised in that an auxiliary spring (21) is interposed between a part (18d) of the rocking lever (18) and a fixed part (16b) of the heater to boost the quick action of the bimetallic disc on the lever (18).

5. A water heater according to any one of claims 2 to 4, characterised in that the rocking lever (18) acts on the circuit-breaker (7) by means of a pendular lever (20) articulated by one of its ends (20b) an a fixed part (16a) of the heater, the circuit-breaker (7) being acted on by the other end (20e) of the lever in response to a thrust from the rocking lever (18) in a central zone (20a) of said pendular lever (20).

6. A water heater according to claim 1, characterised in that the means (12) for breaking the power supply and co-operating with the second means (13) sensitive to the temperature at the base (1a) of the container (1) comprise a sleeve (21) adapted to slide freely on a lug (22) formed on a fixed part (16c) of the heater and one of the ends (21a) of which is mechanically connected to said second temperature-sensitive means (13) through which it extends and the other end forms a slider (23) adapted to actuate the circuit-breaker element (7) to break the power supply.

7. A water heater according to claim 6, characterised in that a clearance (J) is provided in the inoperative state between the slider (23) and the circuit-breaker element (7) so as to control the start of actuation of the latter.

8. A water heater according to claim 1 or 6, characterised in that the second temperature-sensitive means (13) comprises a resettable quick-return bimetallic disc disposed in a zone of the base (1a) of the container (1) bordering on the heating resistance (2).

9. A water heater according to claim 9, characterised in that resetting of the bimetallic disc (13) is effected automatically in dependence on the temperature drop at the base of the container (1a), which takes place immediately after a temperature rise, to give a regulating effect by a positive or negative action on the circuit-breaker element (7).

10. A water heater according to claim 1 or 6, characterised in that the third means sensitive to the temperature at the base (1a) of the container (1) comprises a fusible part (29) interposed between the centre of a heat zone (27) of the base (1a) of the container (1) bordering on the heating resistance (2) and one end (21a) of the sleeve (21) remote from the slider (23) of the circuit-breaker element (7), break actuation of the latter being adapted to take place in response to the expansion of an elastic means (30) disposed between a fixed part (22) of the heater and an inner shoulder (21c) of the sleeve (21).

11. A water heater according to any one of the preceding claims, characterised in that a separate electrical connecting element (7a, 7b) is disposed respectively between each end (2a, 2b) of the electrical heating resistance (2) and each end (9a, 9b) of the connecting pins (5a, 5b) to give simultaneous two-pole breaking of the power supply irrespective of what breaking means (10, 12, 28) are operative acting on said electrical connecting elements (7a, 7b).

12. A water heater according to any one of the preceding claims, characterised in that each electrical connecting element (7a, 7b) comprises an elastically deformable conductive metal strip whose end in contact with a supply pin (5a, 5b) is provided with a contact projection (8a, 8b).

## Patentansprüche

1. Wasserkocher, der Dampf erzeugt, insbesondere Kessel, mit einem Wasserbehälter (1), der einen elektrischen Heizwiderstand (2) enthält, der mit Stiften (5a, 5b) verbunden ist, die ihrerseits mit dem elektrischen Netz verbindbar sind, mit einem ersten, für die Temperatur des erzeugten Dampfes empfindlichen Element, das mit einer Einrichtung zum Abschalten der Stromzufuhr des Heizwiderstands (2) bei einer bestimmten Temperatur zusammenwirkt, und mit einem zweiten, für die am Boden (1a) des Behälters (1) herrschende Temperatur empfindlichen Element, das mit einer Einrichtung zum Abschalten der Stromzufuhr des Heizwiderstands (2) zusammenwirkt, wenn dieses Element eine über einer festgelegten Schwelle liegende Temperatur aufgrund des Fehlens oder einer nicht ausreichenden Menge von Wasser in dem Behälter (1) feststellt, wobei die Stromzufuhrabschalteinrichtungen (10, 12) des elektrischen Heizwiderstands (2), die mit dem ersten, für die Temperatur des Dampfes empfindlichen Element (11) bzw. mit dem zweiten, für die am Boden (1a) des Behälters (1) herrschende Temperatur empflindlichen Element (13) zusammenwirken, in Abhängigkeit ihrer eigenen Parameter unterschiedlich auf ein einen Unterbrecher (7) bildendes elektrisches Verbindungselement einwirken, dadurch gekennzeichnet, daß der Unterbrecher direkt zwischen den Enden (2a, 2b) des elektrischen Heizwiderstands (2) und einem Ende der Verbindungsstifte (5a, 5b) angeordnet ist, um die Stromzufuhr des Heizwiderstands (2) in Abhängigkeit der Parameter gleichzeitig zweipolig automatisch zu unterbrechen, und daß er ein drittes Element (28) umfaßt, das temperaturempfindlich ist und auf das gleiche gemeinsame elektrische Verbindungselement (7) einwirkt, um die Stromzufuhr des Heizwiderstands (2) für den Fall gleichzeitig zweipolig automatisch schnell und endgültig zu unterbrechen, daß die mit den ersten bzw. zweiten temperaturempfindlichen Elementen (11, 13) zusammenwirkenden Abschalteinrichtungen (10, 12) ausfallen.

2. Wasserkocher nach Anspruch 1, dadurch gekennzeichnet, daß die Stromzufuhrabschalteinrichtung (10), die mit dem ersten, für die Temperatur des Dampfes empfindlichen Element (11) zusammenwirkt, aus einem Kipphebel (18) besteht, der in einem mittleren Bereich (18a) an einem festen Teil (16) des Wasserkochers angelenkt (19) ist und von dem eines den Enden (18b) von dem ersten, für die Temperatur des Dampfes empfindlichen Element (11) um seine Anlenkung (19) herum in Betätigungsstellung gedrückt werden kann, wobei dessen anderes Ende dann auf das einen Unterbrecher (7) bildende elektrische Verbindungselement einwirkt, um die Stromzufuhr zu unterbrechen.

3. Wasserkocher nach einem der Ansprüche 1 oder 2, dadurch gekennzeichnet, daß das erste temperaturempfindliche Element (11) aus einer von Hand rückstellbaren, abrupt zurückschnellenden Bimetallscheibe besteht, die außerhalb der Reichweite des in dem Kocher enthaltenen Wassers gehalten wird.

4. Wasserkocher nach einem der Ansprüche 1 bis 3, dadurch gekennzeichnet, daß eine Unterstützungsfeder (21) zwischen einen Abschnitt (18d) des Kipphebels (18) und einen festen Teil (16b) des Kochers eingefügt ist, um die abrupte Wirkung der Bimetallscheibe auf den Kipphebel (18) zu verstärken.

5. Wasserkocher nach einem der Ansprüche 2 bis 4, dadurch gekennzeichnet, daß der Kipphebel (18) auf den Unterbrecher (7) über einen Schwinghebel (20) einwirkt, der an einem seiner Enden (20b) an einem festen Teil (16a) des Kochers angelenkt ist, wobei die Wirkung auf den Unterbrecher (7) mittels seines anderen Endes (20e) unter der Wirkung des Druckes des Kipphebels (18) auf den mittleren Bereich (20a) des Schwinghebels (20) erfolgt.

6. Wasserkocher nach Anspruch 1, dadurch gekennzeichnet, daß die Stromzufuhrabschalteinrichtung (12), die mit dem zweiten, für die am Boden (1a) des Behälters (1) herrschende Temperatur emfpindlichen Element (13) zusammenwirkt, aus einer Gleithülse (21) besteht, die frei auf einem aus einem festen Teil (16c) des Kochers hervorragenden Metallstück (22) gleiten kann und von der ein Ende (21a) mechanisch mit dem zweiten temperaturempfindlichen Element (13) verbunden ist, das es durchsetzt, und deren anderes Ende einen Schieber (23) bildet, der so ausgebildet ist, daß er das einen Unterbrecher (7) bildende elektrische Verbindungselement mitnimmt und dadurch betätigt, um die Stromzuzfuhr abzuschalten.

7. Wasserkocher nach Anspruch 6, dadurch gekennzeichnet, daß in Ruhestellung ein Spiel (J) zwischen dem Mitnahmeschieber (23) und dem elektrischen Verbindungselement (7) derart vorgesehen ist, daß der Beginn der Betätigung des letzteren gesteuert werden kann.

8. Wasserkocher nach einem der Ansprüche 1 oder 6, dadurch kennzeichnet, daß das zweite temperaturempfindliche Element (13) aus einer rückstellbaren, abrupt zurückschnellenden Bimetallscheibe besteht, die in einem dem Heizwiderstand (2) benachbarten Bereich des Bodens (1a) des Behälters (1) angeordnet ist.

9. Wasserkocher nach Anspruch 8, dadurch gekennzeichnet, daß die Bimetallscheibe (13) automatisch in Abhängigkeit vom Absinken der am Behälterboden (1a) herrschenden Temperatur zurückgestellt wird, das unmittelbar nach einer Temperaturerhöhung erfolgt, um eine Regelungswirkung durch positive oder negative Einwirkung auf das elektrische Verbindungselelment oder den Unterbrecher (7) zu erhalten.

10. Wasserkocher nach einem der Ansprüche 1 oder 6, dadurch gekennzeichnet, daß das dritte, für die am Boden (1a) des Behälters (1) herrschende Temperatur empfindliche Element aus einem Schmelzeinsatz (29) besteht, der zwischen der dem Heizwiderstand (2) benachbarten Mitte eines Wärmebereichs (27) des Bodens (1a) des Behälters (1) und einem Ende (21a) der Gleithülse (21) angeordnet ist und dem Mitnahmeschieber (23) des elektrischen Verbindungselements (7) gegenüberliegt, wobei die Abschaltbetätigung des letzteren durch die Wirkung der Entspannung eines elastischen Organs (30) erfolgen kann, das zwischen einem festen Teil (22) des Kochers und einer Innenschulter (21c) der Gleithülse (21) angeordnet ist.

11. Wasserkocher nach einem der vorhergehenden Ansprüche, dadurch gekennzeichnet, daß jeweils ein gesondert ausgebildetes elektrisches Verbindungselement (7a, 7b) zwischen jedem Ende (2a, 2b) des elektrischen Heizwiderstands (2) und jedem Ende (9a, 9b) der Anschlußzapfen (5a, 5b) derart angeordnet ist, daß die Stromzufuhr unabhängig von den auf die elektrischen Verbindungselemente (7a, 7b) einwirkenden Abschalteinrichtungen (10, 12, 28) gleichzeitig zweipolig unterbrochen wird.

12. Wasserkocher nach einem der vorhergehenden Ansprüche, dadurch gekennzeichnet, daß jedes elektrische Verbindungselement (7a, 7b) aus einem elastisch verformbaren, leitenden Metallstreifen besteht, der an seinem mit einem Versorgungszapfen (5a, 5b) in Kontakt stehenden Ende mit einem Kontaktpunkt (8a, 8b) versehen ist.
